# FASCICULE DE BREVET EUROPEEN

(11) **EP 0 733 462 B1**
(45) Date de publication et mention de la délivrance du brevet: **10.11.1999**
(21) Numéro de dépôt: 96420081.0
(22) Date de dépôt: 14.03.1996
(51) Int. Cl.: B29C 65/66, A01G 27/02, B65D 8/06, B29C 59/00

(54) **Procédé d'assemblage d'un bac à fleurs et bac à fleurs obtenu par ce procédé**
Verfahren zum Zusammenbau eines Blumentopfs und Blumentopf erhalten durch diesesVerfahren
Method for assembling a flower pot and a flower pot obtained by such a method

(30) Priorité: 21.03.1995 FR 9503527
(43) Date de publication de la demande: 25.09.1996
(73) Titulaire: ETABLISSEMENTS GEORGES DAVID, 01100 Oyonnax (FR)
(72) Inventeur: David, Georges, 01100 Oyonnax (FR); Tiradon, Michel, 01100 Oyonnax (FR)
(74) Mandataire: Myon, Gérard Jean-Pierre

(56) Documents cités:
- EP-A- 0 240 641
- FR-A- 1 083 705
- FR-A- 2 053 627
- FR-A- 2 114 178
- FR-A- 2 338 783
- FR-A- 2 571 277
- US-A- 2 808 090
- US-A- 3 847 494
- US-A- 3 871 543
- PATENT ABSTRACTS OF JAPAN vol. 008, no. 154 (M-310), 18 Juillet 1984 & JP-A-59 049948 (KOUJI MUROOKA;OTHERS: 01), 22 Mars 1984,

## Description

La présente invention a trait à un bac à fleurs à double paroi et à son procédé d'assemblage.

On connaît des récipients de ce genre qui comprennent généralement un bac en matière plastique dans lequel est disposée au-dessus du fond une cloison horizontale délimitant deux espaces distincts. La cloison horizontale comporte une multitude de trous permettant la communication entre les deux espaces. L'espace compris entre le fond et la cloison horizontale constitue une réserve d'eau qui peut être alimentée par l'extérieur par tout moyen. La cloison horizontale forme une grille permettant d'une part la retenue de la terre végétale et d'autre part la remontée de l'eau par capillarité.

Les pots à réserve d'eau décrits ci-dessus ne comportent pas de double paroi, si bien qu'ils sont peu isolants par rapport à la température ambiante.

On connaît d'autre part des récipients à double paroi de grandes dimensions fabriqués par le procédé de moulage par rotation d'une matière plastique en poudre.

Les récipients à double paroi obtenus par le procédé de moulage par rotation sont chers, car la cadence de production est faible et le matériel de mise en oeuvre est très couteux. De plus, ils ne peuvent pas facilement comporter une réserve d'eau.

FR-A-2 114 178 décrit un bac à fleurs à double paroi comprenant un pot et un cache-pot, ce bac à fleurs étant conforme aux préambules des revendications 1 et 5. Les moyens d'assemblage entre ce pot et ce cache-pot ne sont pas décrits.

L'invention vise à améliorer les dispositifs connus en proposant un procédé et des moyens d'assemblage simples et particulièrement efficaces d'un pot et d'une coque de bac à fleurs à réserve d'eau.

Cet objectif est atteint grâce au procédé de la revendication 1 et au bac à fleurs de la revendication 5.

Selon des caractéristiques avantageuses de l'invention,
- la paroi du pot comporte un trou dont l'accès est délimité par un bec s'étendant à l'intérieur du pot suivant une direction sensiblement verticale ;
- la paroi du pot comporte des nervures verticales permettant la rigidification du pot et son autocentrage à l'intérieur de la coque ;
- la protubérance solidaire du fond du pot est fermée par un fond et comporte, au dessus du fond, des trous pour le passage de l'eau contenue entre les deux parois du pot et de la coque, entre la jupe verticale et la protubérance, vers l'intérieur de l'espace du pot.

Fig. 1 est une vue en coupe montrant un pot et une coque constituant les éléments d'un récipient à double paroi obtenue par le procédé suivant la présente invention.
Fig. 2 et 3 sont des vues illustrant les différentes étapes de mise en place du pot à l'intérieur de la coque.
Fig. 4 est une coupe représentant le pot disposé à l'intérieur de la coque après refroidissement de cette dernière.
Fig. 5 est une vue de détail à plus grande échelle montrant la liaison non démontable entre le pot et la coque du récipient.

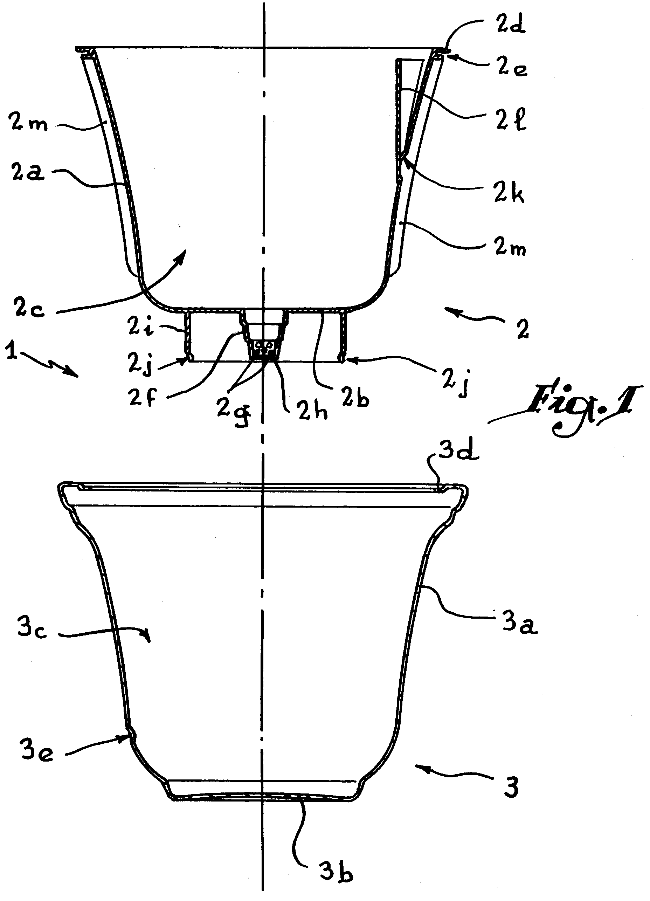

On a représenté en fig. 1 un récipient 1 constitué d'un pot 2 et d'une coque 3 réalisée par moulage ou soufflage d'une matière plastique ou autre. Le pot 2 peut être fabriqué en une matière quelconque rigide totalement différente de celle utilisée pour la coque 3, mais cette dernière doit être obligatoirement réalisée dans une matière plastique. Le récipient 1 peut affecter une forme géométrique extérieure quelconque de type circulaire, rectangulaire ou autre.

Le pot 2, qui est fabriqué en une seule pièce, préférablement par injection sous pression, comporte une paroi 2a et un fond 2b délimitant un espace 2c ouvert à la partie supérieure du pot 2, ce qui permet l'introduction de tout type de produit à l'intérieur, comme on l'expliquera mieux plus loin. La paroi 2a peut être circulaire et légèrement évasée, ou présenter une autre forme. La paroi 2a comprend un rebord périphérique horizontal 2d situé au niveau de l'ouverture et qui est tourné en direction de l'extérieur du pot 2. Le rebord périphérique 2d est rigide et comporte une gorge 2e dont le profil interne peut être de forme quelconque.

Le fond 2b du pot 2 monobloc se prolonge en son milieu par une protubérance creuse 2f faisant saillie à l'opposé de l'espace 2c. L'extrémité libre de la protubérance 2f est fermée par un fond 2h qui est parallèle à celui 2b du pot 2. La proturérance 2f présente un profil conique dont la base la plus large est tournée du côté de l'espace libre 2c.

L'extrémité libre de la protubérance 2f est percée d'un certain nombre de petits trous 2g dont on verra mieux plus loin les fonctions.

Le fond 2b est solidaire concentriquement à la protubérance 2f d'une jupe verticale 2i formant un pied. La jupe verticale 2i est légèrement plus longue que la protubérance conique 2f et comporte sur son bord périphérique un certain nombre d'encoches débouchantes 2j.

La paroi 2a est percée à une hauteur pré-déterminée d'un trou 2k situé à la base d'un bec 2l disposé à l'intérieur de l'espace 2c contre sa paroi interne et qui s'étend en direction de l'ouverture du pot 2 et suivant une inclinaison différente de celle prévue pour la paroi 2a.

La face extérieure de la paroi 2a est solidaire d'un certain nombre de nervures verticales 2m permettant la rigidification du pot 2 et son auto-centrage à l'intérieur de la coque 3, comme on le verra mieux plus loin.

La coque 3 comporte une paroi 3a dont le profil extérieur est sensiblement identique à celui du pot 2 et un fond 3b délimitant un espace 3c dont les dimensions intérieures sont supérieures à celles extérieures du pot 2. La paroi 3a comprend à l'opposé du fond 3b une collerette périphérique horizontale 3d tournée vers l'intérieur de la coque 3 qui délimite son ouverture. La paroi 3a est percée d'un trou 3e situé au-dessus du fond 3b et dont la distance par rapport à celui-ci varie en fonction de la hauteur de la jupe verticale 2i et du pot 2.

On observe que la technique du moulage par soufflage de la coque 3 permet d'obtenir facilement la collerette horizontale 3 qui est en contre-dépouille.

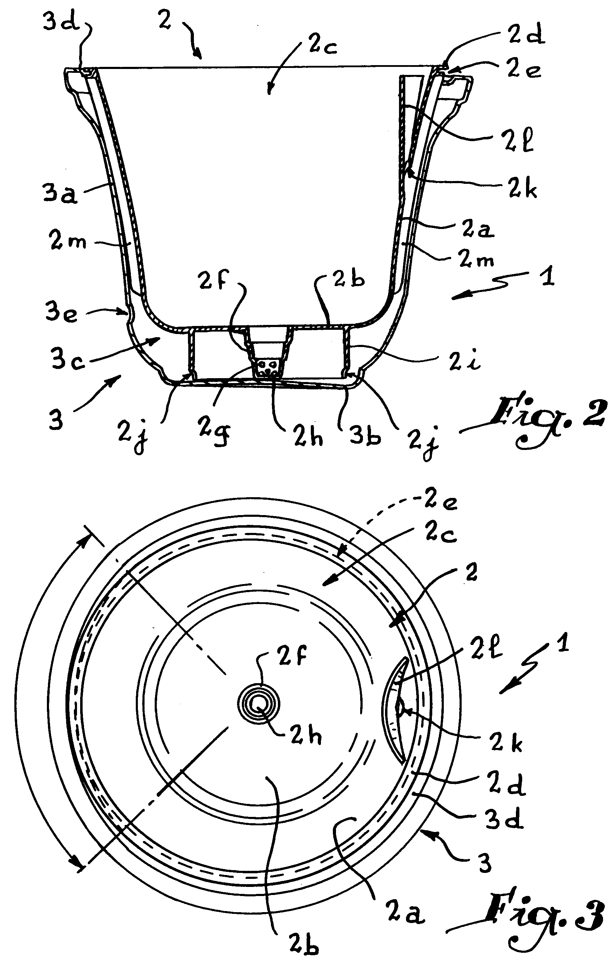

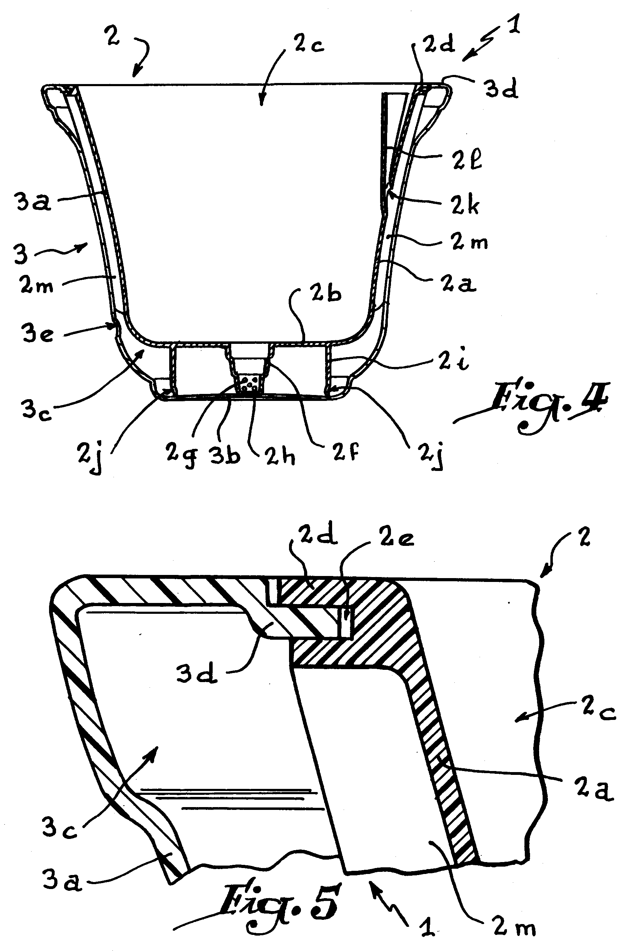

Le récipient 1 décrit précédemment, constitué de son pot 2 et de sa coque 3, est obtenu de la manière suivante :
- On moule d'abord le pot 2 en une matière rigide qui peut être soit du plastique, soit tout autre matière et qui comporte l'ensemble de la structure décrite précédemment ;
- On laisse refroidir le pot 2 pour qu'il atteigne ses dimensions définitives et la rigidité recherchée ;
- On moule ensuite séparément la coque 3 qui est réalisée impérativement dans une matière plastique de manière que ses dimensions internes soient supérieures à celles externes du pot 2 et qu'elle comporte l'ensemble des caractéristiques décrites précédemment.
- On engage le pot 2 dans la coque 3 encore chaude (à environ 50°), c'est-à-dire légèrement souple ou molle du fait de sa matière constitutive. L'engagement du pot 2 à l'intérieur de la coque 3 permet tout d'abord l'introduction d'un secteur de la collerette 3d dans un secteur correspondant de la gorge 2e ménagée dans le rebord périphérique 2d du pot 2. Le secteur de la collerette 3d et de la gorge 2e forme un angle au centre prévu entre 60 et 90° (fig. 2 et 3).
- On procède ensuite à la déformation centrifuge du reste de la collerette 3d de la coque 3 permettant de l'engager complètement dans la gorge 2e du rebord périphérique 2d.
- On laisse enfin refroidir complètement la coque 3 afin que le retrait de sa matière constitutive provoque une diminution de ses dimensions, permettant à la collerette 3d de s'engager complètement et de manière non démontable dans la gorge 2e du rebord 2d du pot 2 (fig. 4 et 5).

On note que la coque 3 affectant par exemple une forme circulaire est fabriquée préférablement par soufflage d'une matière plastique.

Bien entendu, le récipient 1 à double paroi constitue un bac à fleurs à réserve d'eau. En effet, le bec 2l permet à l'utilisateur de remplir d'eau l'espace prévu entre les parois 3a et 2a. On remarque que le trou 3e joue la fonction de trop plein, tandis que la jupe verticale 2i munie de ses encoches 2j permet le passage de l'eau contenue entre les deux parois jusqu'à ce qu'elle atteigne la protubérance conique 2f qui permet à l'aide de ses trous 2g de faire remonter l'eau à l'intérieur de l'espace 2c du pot 2 par capillarité dans la terre végétale remplissant le pot 2.

On note que la surface extérieure de paroi 3a peut être sablée pour lui donner l'aspect de la terre cuite.

## Revendications

1. Procédé d'assemblage d'un bac à fleurs (1), à réserve d'eau et à double paroi, du genre comprenant un pot (2) réalisé en matière rigide injectée et une coque (3) moulée par soufflage, ledit pot comprenant une paroi (2a) solidaire d'un fond (2b) alors que ladite coque comprend une paroi (3a) et un fond (3b), caractérisé en ce qu'il consiste à former ledit fond (2b) de telle sorte qu'il se prolonge par une protubérance creuse (2f) d'une pièce avec ce fond et bordée de part et d'autre par une jupe verticale (2i) faisant office de pieds et à assembler ledit pot (2) et ladite coque (3) encore chaude, en faisant pénétrer une collerette périphérique (3d) de ladite coque dans une gorge (2e) définie dans un rebord périphérique (2d), tourné vers l'extérieur, de la paroi (2a) dudit pot (2).

2. Procédé selon la revendication 1, caractérisé en ce qu'il consiste à introduire un secteur de ladite collerette périphérique (3d) dans un secteur correspondant de ladite gorge (2e) et à procéder à une déformation centrifuge du reste de ladite collerette.

3. Procédé selon l'une des revendications 1 ou 2, caractérisé en ce qu'il consiste à laisser refroidir complètement ladite coque (3) afin que le retrait de sa matière constitutive provoque une diminution de ses dimensions, permettant à ladite collerette (3d) de s'engager complètement et de manière non démontable dans ladite gorge (2e).

4. Procédé selon l'une des revendications précédentes, caractérisé en ce qu'il consiste à laisser refroidir ledit pot (2) pour qu'il atteigne ses dimensions définitives avant son assemblage avec ladite coque (3).

5. Bac à fleurs (1), à réserve d'eau et à double paroi, du genre comprenant un pot (2) réalisé en matière rigide injectée et une coque (3) moulée par soufflage, ledit pot comprenant une paroi (2a) solidaire d'un fond (2b) alors que ladite coque comprend une paroi (3a) et un fond (3b), caractérisé en ce que la paroi (2a) dudit pot comporte un rebord périphérique (2d) tourné vers l'extérieur et dans lequel est prévue une gorge (2e), en ce que ladite coque comprend une collerette périphérique (3d) apte à s'engager dans ladite gorge pour la fixation dudit pot (2) avec ladite coque (3) et en ce que le fond (2b) dudit pot (2) se prolonge par une protubérance creuse (2f) d'une pièce avec ce fond et bordée de part et d'autre par une jupe verticale (2i) faisant office de pieds.

6. Bac à fleurs selon la revendication 5, caractérisé en ce que ladite paroi (2a) dudit pot (2) comporte un trou (2k) dont l'accès est délimité par un bec (2l) s'étendant à l'intérieur du pot (2) suivant une direction sensiblement verticale.

7. Bac à fleurs selon l'une des revendications 5 ou 6, caractérisé en ce que la paroi (2a) dudit pot comporte des nervures verticales (2m) permettant la rigidification dudit pot (2) et son autocentrage à l'intérieur de ladite coque (3).

8. Bac à fleurs selon l'une des revendications 5 à 7, caractérisé en ce que ladite protubérance (2f) est fermée par un fond (2h) et comporte, au dessus dudit fond, des trous (2g) pour le passage de l'eau contenue entre lesdites deux parois (2a, 3a) dudit pot (2) et de ladite coque (3), entre ladite jupe verticale (2i) et ladite protubérance, vers l'intérieur de l'espace (2c) dudit pot (2).

9. Bac à fleurs selon l'une des revendications 5 à 8, caractérisé en ce que ladite jupe verticale (2i) comprend, sur son bord périphérique, plusieurs encoches (2j).

10. Bac à fleurs selon l'une des revendications 5 à 9, caractérisé en ce que ladite coque (3) est sablée sur la face extérieure de sa paroi (3a).

## Claims

1. Method for assembling a flower pot (1), with a water reservoir and a double wall, of the type comprising a pot (2), produced from an injected rigid material, and a blow-moulded shell (3), the said pot comprising a wall (2a) integral with a base (2b) whilst the said shell comprises a wall (3a) and a base (3b), characterized in that it consists in forming the said base (2b) in such a manner that it is extended by a hollow protuberance (2f) in a single piece with this base and bordered on either side by a vertical skirt (2i) acting as feet and in assembling the said pot (2) and the said shell (3) whilst hot causing a peripheral collar (3d) of the said shell to penetrate into a groove (2e) defined in an outward facing peripheral rim (2d) of the wall (2a) of the said pot (2).

2. Method according to Claim 1, characterized in that it consists in introducing a sector of the said peripheral collar (3d) into a corresponding sector of the said groove (2e) and in then performing a centrifugal deformation of the rest of the said collar.

3. Method according to either of Claims 1 and 2, characterized in that it consists in allowing the said shell (3) to cool completely so that the retraction of its constituent material gives rise to a reduction in its dimensions, allowing the said collar (3d) to become engaged completely and in a non-dismantleable manner in the said groove (2e).

4. Method according to one of the preceding claims, characterized in that it consists in allowing the said pot (2) to cool so that it attains its definitive dimensions prior to being assembled with the said shell (3).

5. Flower pot (1), with a water reservoir and a double wall, of the type comprising a pot (2) produced from an injected rigid material, and a blow-moulded shell (3), the said pot comprising a wall (2a) integral with a base (2b) whilst the said shell comprises a wall (3a) and a base (3b), characterized in that the wall (2a) of the said pot includes a peripheral rim (2d) which faces outwards and in which a groove (2e) is provided, in that the said shell comprises a peripheral collar (3d) capable of engaging in the said groove for fastening the said pot (2) to the said shell (3); and in that the base (2b) of the said pot (2) is extended by a hollow protuberance (2f) in a single piece with this base and bordered on either side by a vertical skirt (2i) acting as feet.

6. Flower pot according to Claim 5, characterized in that the said wall (2a) of the said pot (2) includes a hole (2k) to which access is delimited by a spout (2l) extending inside the pot (2) in a substantially vertical direction.

7. Flower pot according to either of Claims 5 and 6, characterized in that the wall (2a) of the said pot includes vertical ribs (2m) allowing stiffening of the said pot (2) and its self-centring inside the said shell (3).

8. Flower pot according to one of Claims 5 to 7, characterized in that the said protuberance (2f) is closed by a base (2h) and includes, above the said base, holes (2g) for the passage of the water contained between the said two walls (2a, 3a) of the said pot (2) and the said shell (3), between the said vertical skirt (2i) and the said protuberance, towards the inside of the space (2c) of the said pot (2).

9. Flower pot according to one of Claims 5 to 8, characterized in that the said vertical skirt (2i) comprises several notches (2j) on its peripheral edge.

10. Flower pot according to one of Claims 5 to 9, characterized in that the said shell (3) is sanded on the outer face of its wall (3a).

## Patentansprüche

1. Verfahren zum Zusammenfügen eines Blumenbehälters mit einer Wasserreserve und einer Doppelwand der Art, die einen aus einem steifen, gespritzten Material hergestellten Topf (2) und eine durch Blasen geformte Schale (3) aufweist, wobei der Topf eine einstückig mit einem Boden (2b) versehene Wand (20) umfaßt, während die Schale eine Wand (3a) und einen Boden (3b) umfaßt,
**dadurch gekennzeichnet,**
daß es darin besteht, den Boden (2b) derart zu formen, daß er sich durch eine hohle Ausstülpung (2f) in einem Teil mit diesem Boden fortsetzt und die beidseitig von einer vertikalen als Füße dienenden Schürze (2i) eingefaßt ist und weiter darin besteht, den Topf (2) und die noch warme Schale (3) zusammenzusetzen, indem ein Umfangsflansch (3d) der Schale in eine Nut (2e) eingeführt wird, die in einem nach außen gerichteten Umfangsrand (2d) der Wand (2a) des Topfes (2) definiert ist.

2. Verfahren nach Anspruch 1, dadurch gekennzeichnet, daß es darin besteht, einen Abschnitt des Umfangsflansches (3d) in einen entsprechenden Abschnitt der Nut (2e) einzuführen und eine Zentrifugalverformung des übrigen Flansches vorzunehmen.

3. Verfahren nach einem der Ansprüche 1 oder 2, dadurch gekennzeichnet, daß es darin besteht, die Schale (3) vollständig abkühlen zu lassen, damit das Schrumpfen ihres Grundmaterials eine Verringerung ihrer Abmessungen hervorruft, wodurch der Flansch (3d) vollständig und in einer nicht lösbaren Form mit der Nut (2e) in Eingriff treten kann.

4. Verfahren nach einem der vorhergehenden Ansprüche, dadurch gekennzeichnet, daß es darin besteht, den Topf (2) abkühlen zu lassen, damit er seine endgültigen Abmessungen vor seinem Zusammenfügen mit der Schale (3) erreicht.

5. Blumenbehälter (1) mit Wasserreserve und Doppelwand der Art, die einen aus einem steifen gespritzten Material hergestellten Topf (2) und eine durch Blasen geformte Schale (3) aufweist, wobei der Topf (2) eine einstückig mit einem Boden (26) verbundene Wand (2a) umfaßt, während die Schale eine Wand (3a) und einen Boden (3b) umfaßt, dadurch gekennzeichnet, daß die Wand (2a) des Topfes einen nach außen gerichteten Umfangsrand (2d) aufweist, in dem eine Nut (2e) vorgesehen ist, daß die Schale einen Umfangsflansch (3d) umfaßt, der geeignet ist, für die Befestigung des Topfes (2) mit der Schale (3) in die Nut einzugreifen und daß der Boden (2b) des Topfes (2) sich in einer hohlen Ausstülpung (2f) in einem Stück mit diesem Boden fortsetzt, die beidseitig von einer senkrechten als Füße dienenden Schürze eingefaßt ist.

6. Blumenbehälter nach Anspruch 5, dadurch gekennzeichnet, daß die Wand (2a) des Topfes (2) ein Loch (2k) umfaßt, dessen Zugang durch eine Tülle (21) begrenzt ist, die sich ins Innere des Topfes (2) entsprechend einer im Wesentlichen senkrechten Richtung erstreckt.

7. Blumenbehälter nach einem der Ansprüche 5 oder 6, dadurch gekennzeichnet, daß die Wand (2a) des Topfes senkrechte Rippen (2m) umfaßt, die die Versteifung des Topfes (2) und seine Selbstzentrierung im Inneren der Schale (3) gestatten.

8. Blumenbehälter nach einem der Ansprüche 5 bis 7, dadurch gekennzeichnet, daß die Ausstülpung (2f) durch einen Boden (2h) abgeschlossen ist und über dem Boden Löcher (2g) für den Durchgang von Wasser, das zwischen den zwei Wänden (2a, 3a) des Topfes (2) und der Schale (3) zwischen der vertikalen Schürze (2i) und der Ausstülpung enthalten ist, ins Innere des Raumes (2c) des Topfes (2) aufweist.

9. Blumenbehälter nach einem der Ansprüche 5 bis 8, dadurch gekennzeichnet, daß die senkrechte Schürze (2i) an ihrem Umfangsrand mehrere Aussparungen (2j) aufweist.

10. Blumenbehälter nach einem der Ansprüche 5 bis 9, dadurch gekennzeichnet, daß die Schale (3) auf der äußeren Fläche seiner Wand (3a) mit Sand versehen ist.
